# EUROPEAN PATENT APPLICATION

(11) **EP 2 421 245 A2**
(43) Date of publication of application: **22.02.2012**
(21) Application number: 11175144.2
(22) Date of filing: 25.07.2011
(51) Int. Cl.: H04N 5/225, H04N 5/232

(54) **Photographing system**

(30) Priority: 17.08.2010 KR 20100079465
(71) Applicant: LG Innotek Co., Ltd., Seoul 100-714 (KR)
(72) Inventor: Chung,Won Suk, Jung-gu Seoul 100-174 (KR)
(74) Representative: Dreiss

(57) **Abstract**

Provided is a photographing system, which includes a photographing device and a microphone. The photographing device captures an image to generate a video signal and record the generated video signal. The microphone is removably coupled to the photographing device and obtains at least one sound signal. Thus, the photographing system obtains and records a sound signal that satisfies a user's needs.

## Description

### CROSS-REFERENCE TO RELATED APPLICATIONS

The present application claims priority under 35 U.S.C. 119 and 35 U.S.C. 365 to Korean Patent Application No. 10-2010-0079465 (filed on 17 August, 2010), which is hereby incorporated by reference in its entirety.

### BACKGROUND

The present disclosure relates to a photographing system.

With rising living standards, photographing devices are widely used.

Such a photographing device receives light reflected from an object through a lens to form an image on a photosensitive material and record a video signal corresponding to the image. When an external sound wave passes through an input device such as a microphone, the photographing device records an audio signal having a continuous voltage variation. The video signal and the audio signal are output through a display device and a speaker according to a user's operation.

Such photographing devices store input video and audio signals on a magnetic tape using magnetic variations as analog signals. However, in this case, a noise may be generated, and editing of data may be difficult. To address these limitations, a digital recording method is introduced in which a voltage variation is stored using a continuous variation in binary digits 0 and 1, instead of using a magnetic variation. A digital video camcorder (DVC) is a typical photographing device using a digital recording method for video and audio signals.

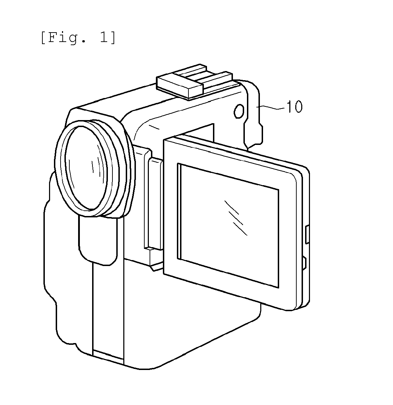

Fig. 1 is a perspective view illustrating a photographing device in the related art.

Referring to Fig. 1, a photographing device 100 captures an image of an object to generate and record a video signal. A microphone (not shown) is disposed in the photographing device 100, and captures a sound signal around an object to generate an audio signal.

However, the photographing device 100 generates and records a typical audio signal.

Thus, a device for recording a sound that gives a user the impression of actually being within the environment from which the sound is generated is required.

### SUMMARY

Embodiments provide a photographing system including a microphone that is removably coupled to a photographing device, thereby maximizing a 3-dimensinal (3-D) sound effect even when a distant object is photographed.

In one embodiment, a photographing system includes: a photographing device capturing an image to generate a video signal and record the generated video signal; and a microphone removably coupled to the photographing device and obtaining at least one sound signal.

The microphone may be selectively removed from the photographing device such that the microphone is disposed in a different space from a space in which the photographing device is disposed, to obtain the sound signal.

The microphone may transmit the sound signal obtained in the different space, to the photographing device, and the photographing device may record the generated video signal and the sound signal transmitted by the microphone.

The microphone may include: one or more sound receiving parts one or more external sound signals, respectively; and a communication part transmitting the external sound signal received by the sound receiving part to the photographing device.

The microphone may further include a mixer mixing the external sound signals to generate an audio signal, and the communication part may transmit the audio signal to the photographing device.

The photographing device may include a fixing part recessed in a predetermined portion of a main body thereof, and the microphone may include a fitting part protruding from a predetermined portion thereof such that the fitting part is inserted in the fixing part.

The photographing device may include: a receiving part receiving the video signal; a communication part receiving one or more sound signals and an audio signal transmitted by the microphone; a storage part storing at least one of the video signal, the sound signal, and the audio signal; and a control part controlling recording and reproducing of the video signal and the sound signal.

The photographing device may further include a mixer mixing the sound signals received by the communication part to generate an audio signal.

The photographing device may further include: a video signal processor converting the video signal into a digital video signal; and a codec synthesizing the digital video signal and the audio signal.

The communication part may communicate with the microphone by using a wireless communication method, and the wireless communication method may include at least one of Wi-Fi and Bluetooth.

The photographing device may further include: a first output part outputting the stored audio signal; and a second output part outputting the stored video signal.

In another embodiment, a photographing system includes: a photographing device including a fixing part recessed in a predetermined portion, and capturing an image of an object to generate a video signal; and a microphone including a fitting part protruding to be inserted in the fixing part, and receiving a sound signal, wherein the microphone is coupled to the photographing device to receive the sound signal, or is selectively removed from the photographing device to receive the sound signal.

The photographing system may further include an elastic member in the fixing part to provide elastic force between the fitting part and the fixing part.

The photographing system may further include a guide rail in the fixing part to guide inserting of the fitting part.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view illustrating a photographing device in the related art.

Fig. 2 is a schematic view illustrating a photographing system according to an embodiment.

Fig. 3 is a block diagram illustrating a microphone of Fig. 2.

Fig. 4 is a block diagram illustrating a photographing device of Fig. 2.

Fig. 5 is a perspective view illustrating a photographing system according to an embodiment.

### DETAILED DESCRIPTION OF THE EMBODIMENTS

Since the present disclosure may have diverse modified embodiments, specific embodiments are illustrated in the drawings and are described in detail.

However, this does not limit the present disclosure within specific embodiments and it should be understood that the present disclosure covers all the modifications, equivalents, and replacements within the idea and technical scope of the present disclosure.

It will be understood that although the terms of first and second are used herein to describe various elements, these elements should not be limited by these terms. Terms are only used to distinguish one component from other components. Therefore, a component referred to as a first component in one embodiment can be referred to as a second component in another embodiment. The word 'and/or' means that one or more or a combination of relevant constituent elements is possible.

It will also be understood that when an element is referred to as being 'connected to' another element, it can be directly connected to the other element, or intervening elements may also be present. It will also be understood that when an element is referred to as being 'directly connected to' another element, there is no intervening elements.

In the following description, the technical terms are used only for explaining a specific exemplary embodiment while not limiting the present disclosure. The terms of a singular form may include plural forms unless referred to the contrary. The meaning of 'include' or 'comprise' specifies a property, a region, a fixed number, a step, a process, an element and/or a component but does not exclude other properties, regions, fixed numbers, steps, processes, elements and/or components.

Unless terms used in the present disclosure are defined differently, the terms may be construed as meaning known to those skilled in the art. Terms such as terms that are generally used and have been in dictionaries should be construed as having meanings matched with contextual meanings in the art. In this description, unless defined clearly, terms are not ideally, excessively construed as formal meanings.

Embodiments of the present disclosure will be described below in more detail with reference to the accompanying drawings. For convenience of description and clarity, like reference numerals denote like elements throughout.

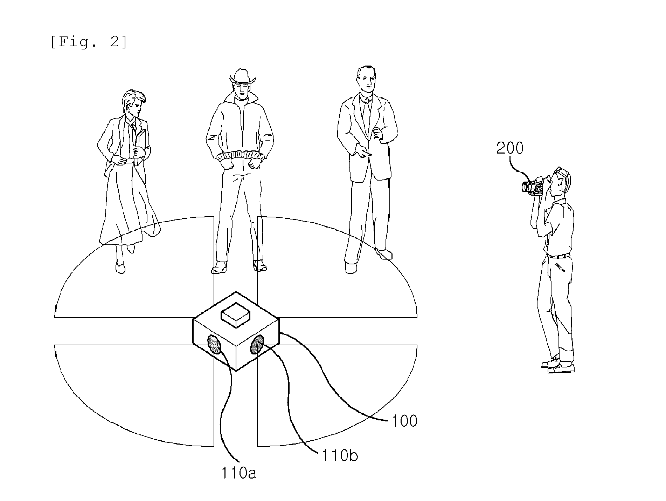

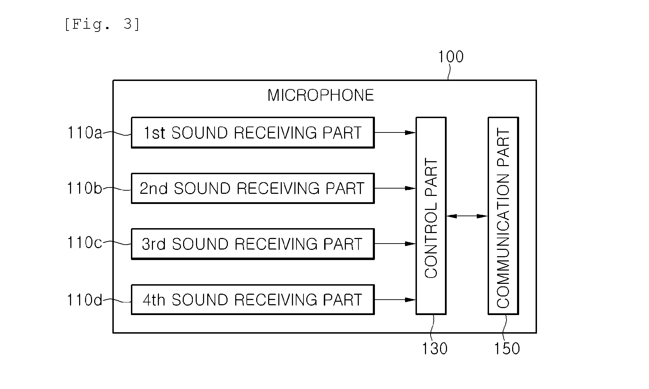

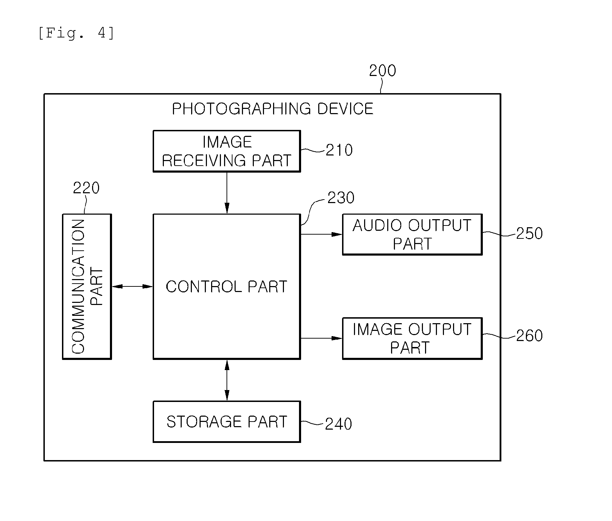

Fig. 2 is a schematic view illustrating a photographing system according to an embodiment. Fig. 3 is a block diagram illustrating a microphone of Fig. 2. Fig. 4 is a block diagram illustrating a photographing device of Fig. 2.

Referring to Figs. 2 to 4, the photographing system includes a microphone 100 and a photographing device 200.

The microphone 100 receives a sound wave or an ultrasonic wave, and generates an electric signal according to a vibration thereof. The microphone 100 may be referred to as a MIC.

The microphone 100 is removably coupled to the photographing device 200 to be described later. A structure in which the microphone 100 is removably coupled to the photographing device 200 will be described later in detail with reference to Fig. 4.

The microphone 100 includes one or more sound receiving parts 110, a control part 130, and a communication part 150.

The sound receiving parts 110 may include a first sound receiving part 110a, a second sound receiving part 110b, a third sound receiving part 110c, and a fourth sound receiving part 110d.

The number of the sound receiving parts 110 is four in Fig. 3, but is not limited thereto. For example, the number of the sound receiving parts 110 may be six or two.

The first to fourth sound receiving parts 110a, 110b, 110c, and 110d are disposed at different sides of the microphone 100 to receive four external sound signals, respectively.

That is, the first to fourth sound receiving parts 110a, 110b, 110c, and 110d may be disposed at first to fourth sides of the microphone 100, respectively.

In more detail, the first sound receiving part 110a is disposed at a front left side of the microphone 100, and uses an external sound wave to generate an analog sound signal having a continuous voltage difference.

The second sound receiving part 110b is disposed at a front right side of the microphone 100, and uses an external sound wave to generate an analog sound signal having a continuous voltage difference.

The third sound receiving part 110c is disposed at a rear left side of the microphone 100, and uses an external sound wave to generate an analog sound signal having a continuous voltage difference.

The fourth sound receiving part 110d is disposed at a rear right side of the microphone 100, and uses an external sound wave to generate an analog sound signal having a continuous voltage difference.

Alternatively, the first to fourth sound receiving parts 110a, 110b, 110c, and 110d may be disposed at the front, rear, left, and right sides of different sides of the microphone 100, respectively.

The control part 130 controls the overall operation of the microphone 100.

The control part 130 may mix four sound signals received by the first to fourth sound receiving parts 110a, 110b, 110c, and 110d into a single audio signal. To this end, the control part 130 may include a mixer (not shown) for mixing the four sound signals into a single audio signal.

The control part 130 transmits four sound signals received by the first to fourth sound receiving parts 110a, 110b, 110c, and 110d to the photographing device 200.

That is, the control part 130 may transmit the four sound signals to the photographing device 200; or mix the four sound signals into a single audio signal, and then, transmit the single audio signal to the photographing device 200.

An audio signal formed by mixing sound signals is a three-dimensional (3-D) audio signal or a variable directional audio signal, which may have a multi-channel such as a 5.1-channel, a 6.1-channel, or a 7.1-channel.

The communication part 150 communicates with a communicator 220 disposed in the photographing device 200, to transmit an audio signal formed by mixing four sound signals, or four sound signals to the photographing device 200.

At this point, the communication part 150 transmits the audio signal or the four sound signals via a wireless channel. To this end, Wi-Fi or Bluetooth may be used.

The photographing device 200 records and reproduces video and audio signals at the same time, and constitutes a user's terminal such as a video camera (camcorder), PDA, and a cellular phone.

The photographing device 200 includes an image receiving part 210, a communication part 220, a control part 230, a storage part 240, an audio output part 250, and an image output part 260.

The image receiving part 210 receives a video signal. That is, the image receiving part 210 receives a video signal generated based on an image to be photographed.

The image receiving part 210 may include an image capturing part (not shown). The image capturing part may receive light reflected from an object through a lens to form an image on a photosensitive surface and generate a video signal corresponding to the image.

The communication part 220 receives four sound signals or an audio signal from the microphone 100. The communication part 220 may communicate with the communication part 150 of the microphone 100 via a wireless channel.

The control part 230 controls the overall operation of the photographing device 200. The control part 230 mixes four sound signals received by the communication part 220 to generate an audio signal, and then, synthesizes the audio signal and an image signal to record or reproduce them.

In more detail, the control part 230 compresses a video signal received by the image receiving part 210, with an image codec, and generates an audio signal by mixing at least two sound signals. At this point, the generated audio signal is a 3-D audio signal or a variable directional audio signal, which may have a multi-channel such as a 5.1-channel, a 6.1-channel, or a 7.1-channel. Then, the control part 230 synthesizes the video signal and the audio signal to record them in the storage part 240.

To this end, the control part 230 may include a video signal processor (not shown) that coverts the video signal into a digital video signal, and a codec (not shown) that generates digital data formed by combining the digital video signal and the audio signal.

The storage part 240 stores at least one sound signal received from the microphone 100, an audio signal, and a video signal, and reproduces the audio signal and the video signal to provide them to the control part 230. The storage part 240 may include at least one of a magnetic tape, a magnetic disk, an optical disk, a hard disk, and a memory.

The audio output part 250 outputs an audio signal stored in the storage part 240. The audio output part 250 may include at least one speaker.

The image output part 260 outputs a video signal stored in the storage part 240. The image output part 260 may include a liquid crystal display.

The audio output part 250 and the image output part 260 may be separated from the photographing device 200.

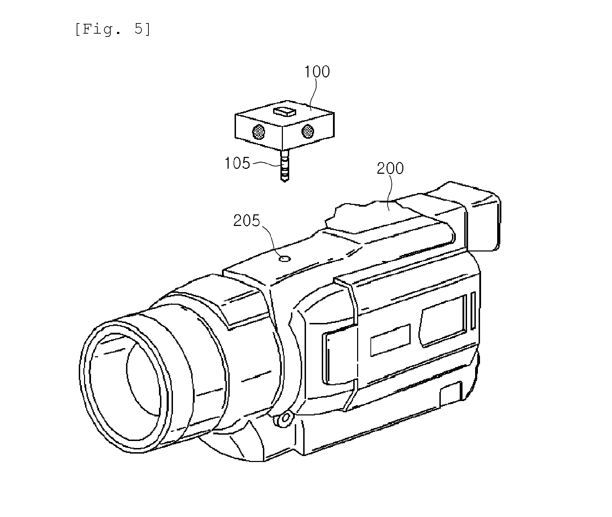

Fig. 5 is a perspective view illustrating a microphone that is removably coupled to a photographing device, according to an embodiment.

Referring to Fig. 5, a fixing part 205 is recessed in a predetermined portion of a main body of the photographing device 200. The fixing part 205 may be disposed in the upper portion of the photographing device 200.

A fitting part 105 protrudes from a predetermined portion of the microphone 100 to correspond to the fixing part 205, and thus, is fitted in the fixing part 205. The fitting part 105 may be disposed on the bottom surface of the microphone 100.

The fitting part 105 is inserted in the fixing part 205 of the photographing device 200, and may rotate through a predetermined angle within the fixing part 205.

That is, when the microphone 100 is coupled to the photographing device 200, the fixing part 205 is directed in a perpendicular direction to the bottom surface of the microphone 100. After the microphone 100 is removed from the photographing device 200, the fixing part 205 is directed in a parallel direction to the bottom surface of the microphone 100.

The fitting part 105 may have a rhombus shape, and an elastic member may be disposed in the fixing part 205. When the fitting part 105 is inserted into the fixing part 205, the elastic member may be spread outward. After the fitting part 105 is completely inserted, the elastic member may be compressed inward to hold the fitting part 105.

A guide rail may be disposed on the upper portion of the main body of the photographing device 200, and the microphone 100 may include a guide roller that moves along the guide rail of the photographing device 200. Thus, when the microphone 100 is coupled to or decoupled from the photographing device 200, the microphone 100 can slide.

The microphone 100 may include a wheel and a sensor for sensing a sound, so as to move to a sound source. In this case, it is unnecessary for a user to carry the microphone 100 to an area where an object is photographed.

An operation of the photographing system will now be described according to an embodiment.

When an object to be photographed is distant, the microphone 100 is removed from the photographing device 200, and is placed near the object. Thus, the photographing device 200 may be disposed in a first space in which a user is disposed, and the microphone 100 may be disposed in a second space in which the object is disposed.

Next, one or more of the sound receiving parts 110 of the microphone 100 receive one or more sound signals from the object to transmit the sound signals to the photographing device 200.

At this point, the image receiving part 210 of the photographing device 200 receives a video signal generated based on the object, and transmits the video signal to the control part 230.

After that, the control part 230 mixes the sound signals received from the microphone 100, to generate an audio signal having a multi-channel. The control part 230 compresses the video signal with an image codec, and synthesizes the compressed video signal and the generated audio signal to record them in the storage part 240.

Alternatively, the audio output part 250 and the image output part 260 may output the compressed video signal and the generated audio signal through a speaker and an image display.

According to the above embodiments, since the microphone is removably coupled to the photographing device, even when a distant object is photographed, a 3-D sound effect can be maximized.

That is, when a distant object is photographed, the microphone is removed from the photographing device to generate an audio signal and transmit the audio signal to the photographing device via a wireless channel, thereby recording a sound that gives a user the impression of actually being within the environment from which the sound is generated.

When the photographing system is moved or carried, the microphone may be removed from the photographing device. If necessary, the microphone can be easily coupled to the photographing device.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A photographing system comprising:
a photographing device capturing an image to generate a video signal and record the generated video signal; and
a microphone removably coupled to the photographing device and obtaining at least one sound signal.

2. The photographing system according to claim 1, wherein the microphone is selectively removed from the photographing device such that the microphone is disposed in a different space from a space in which the photographing device is disposed, to obtain the sound signal.

3. The photographing system according to claim 2, wherein the microphone transmits the sound signal obtained in the different space, to the photographing device, and
the photographing device records the generated video signal and the sound signal transmitted by the microphone.

4. The photographing system according to claim 1, wherein the microphone comprises:
one or more sound receiving parts one or more external sound signals, respectively; and
a communication part transmitting the external sound signal received by the sound receiving part to the photographing device.

5. The photographing system according to claim 4, wherein the microphone further comprises a mixer mixing the external sound signals to generate an audio signal, and
the communication part transmits the audio signal to the photographing device.

6. The photographing system according to claim 1, wherein the photographing device comprises a fixing part recessed in a predetermined portion of a main body thereof, and
the microphone comprises a fitting part protruding from a predetermined portion thereof such that the fitting part is inserted in the fixing part.

7. The photographing system according to claim 3, wherein the photographing device comprises:
a receiving part receiving the video signal;
a communication part receiving one or more sound signals and an audio signal transmitted by the microphone;
a storage part storing at least one of the video signal, the sound signal, and the audio signal; and
a control part controlling recording and reproducing of the video signal and the sound signal.

8. The photographing system according to claim 7, wherein the photographing device further comprises a mixer mixing the sound signals received by the communication part to generate an audio signal.

9. The photographing system according to claim 7, wherein the photographing device further comprises:
a video signal processor converting the video signal into a digital video signal; and
a codec synthesizing the digital video signal and the audio signal.

10. The photographing system according to claim 7, wherein the communication part communicates with the microphone by using a wireless communication method, and
the wireless communication method comprises at least one of Wi-Fi and Bluetooth.

11. The photographing system according to claim 7, wherein the photographing device further comprises:
a first output part outputting the stored audio signal; and
a second output part outputting the stored video signal.

12. A photographing system comprising:
a photographing device including a fixing part recessed in a predetermined portion, and capturing an image of an object to generate a video signal; and
a microphone including a fitting part protruding to be inserted in the fixing part, and receiving a sound signal,
wherein the microphone is coupled to the photographing device to receive the sound signal, or is selectively removed from the photographing device to receive the sound signal.

13. The photographing system according to claim 12, further comprising an elastic member in the fixing part to provide elastic force between the fitting part and the fixing part.

14. The photographing system according to claim 12, further comprising a guide rail in the fixing part to guide inserting of the fitting part.
